# EUROPEAN PATENT SPECIFICATION

(11) **EP 3 070 775 B1**
(45) Date of publication and mention of the grant of the patent: **19.02.2020**
(21) Application number: 15199143.7
(22) Date of filing: 10.12.2015
(51) Int. Cl.: H01M 8/0612, H01M 8/124, C01B 3/38

(54) **FUEL CELL SYSTEM**
BRENNSTOFFZELLENSYSTEM
SYSTÈME DE PILE À COMBUSTIBLE

(30) Priority: 19.03.2015 JP 2015056138
(43) Date of publication of application: 21.09.2016
(73) Proprietor: AISIN SEIKI KABUSHIKI KAISHA, Kariya-shi, Aichi-ken 448-8650 (JP)
(72) Inventor: ENDO, Satoshi, Kariya-shi, Aichi 448-8650 (JP); ICHIKAWA, Masaki, Kariya-shi, Aichi 448-8650 (JP); MATSUOKA, Akira, Kariya-shi, Aichi 448-8650 (JP)
(74) Representative: TBK

(56) References cited:
- WO-A1-2014/189135
- JP-A- 2007 207 446
- JP-A- 2007 289 852
- JP-A- 2008 034 205
- JP-A- 2008 298 419
- US-A1- 2012 251 904

## Description

### TECHNICAL FIELD

This disclosure generally relates to a fuel cell system.

### BACKGROUND DISCUSSION

A known fuel cell system includes a fuel cell, a combustion portion, an evaporation portion, and a reforming portion. The fuel cell generates an electric power with a reformed gas and with a cathode gas. The combustion portion combusts an anode-off gas that is outputted from the fuel cell. The evaporation portion is heated by the combustion portion and generates a water vapor by evaporating a supplied reforming water. The reforming portion is heated by the combustion portion and generates the reformed gas with the water vapor and with a raw material for reformation. The evaporation portion includes plural granular materials, for example, ceramic balls, at a range where the reforming water is dripped from a distal end of a reforming water supply pipe to a heated bottom portion of the evaporation portion. Because the reforming water dripped from the reforming water supply pipe comes in contact with the granular materials and is spread via respective surfaces of the granular materials, the surface area of the reforming water comes to be increased and the reforming water comes to be easily evaporated. Accordingly, the reforming water is inhibited from bumping and the raw material for reformation can be securely supplied to the evaporation portion. In addition, at least one of respective distal ends of the reforming water supply pipe and a raw material supply pipe for reformation is covered with a meshed material in order to inhibit the granular materials from blocking one of the respective distal ends of the reforming water supply pipe and the raw material supply pipe for reformation due to the entrance of the granular materials to at least one of respective inner portions of the reforming water supply pipe and the raw material supply pipe for reformation that supplies the raw material for reformation to the evaporation portion (for example, JP2011-216283A, hereinafter referred to as Patent reference 1).

However, according to such a construction, that is, according to a construction in which a granular layer filled with the plural granular materials is positioned at the distal end of the reforming water supply pipe, the reforming water supply pipe comes in directly contact with the heated granular materials, or comes in contact with the granular materials via the meshed material. Because the heated granular materials conduct heat, the bumping of the reforming water within the reforming water supply pipe occurs. In a case where the bumping occurs, the great amount of the water vapor is suddenly generated. Accordingly, because the pressure level of the reforming water supply pipe is suddenly increased, the required amount of a raw material gas for reformation cannot be flown to the evaporation portion. Thus, the operation of the fuel cell comes to be unstable.

In another fuel cell system, which has the features defined in the preamble of claim 1, a reformer includes an evaporation portion and a reforming portion, a perforated plate is provided within the evaporation portion to define an upstream of an evaporation chamber including a granular material layer for promoting evaporation, and a reforming water supply pipe supplies water to a position just before the evaporation chamber (see WO2014/189135A1).

In still another fuel cell system, a reformer has an evaporation portion including an evaporation chamber and a mixing chamber filled with a granular material layer, and a reforming water supply pipe discharges reforming water into the evaporation chamber of the evaporation portion to form steam in the evaporation chamber that flows to the mixing chamber (see JP2007-207446A and JP2008-034205A).

In an alternative reformer structure, an input port member, an evaporation portion, a heating portion, and a reforming portion are connected in that order from an inlet opening side, wherein the evaporation portion is a space in which reforming water introduced from a distal end of an inner pipe of the input port member is evaporated by utilizing combustion heat (see US2012/0251904A1).

There is also known an evaporator in which a liquid is supplied from a distal end of a liquid supply pipe connected to a top end of a housing accommodating granular materials. The liquid supplied from the distal end of the liquid supply pipe runs down the granular materials to be evaporated (see JP2007-289852A).

A need thus exists for a fuel cell system that defines a granular material layer filled with granular materials and a distal end of a reforming water supply pipe, and that inhibits a water drop of a reforming water dripped from the distal end of the reforming water supply pipe and a reforming water within the reforming water supply pipe from bumping.

### SUMMARY

According to an aspect of this disclosure, a fuel cell system includes the features set forth in claim 1.

According to the aforementioned construction, the perforated plate defines the granular material layer and the second end of the reforming water supply pipe. Because the recessed portion is provided, the reforming water is easily supplied from the second end of the reforming water supply pipe to the perforated plate. Because the second end of the reforming water supply pipe is surrounded with the recessed portion, the reforming water is inhibited from being dripped directly from the second end of the reforming water supply pipe to the bottom portion of the housing. Because the water drops of the reforming water dripped from the second end of the reforming water supply pipe run down the perforated plate and move toward the heated bottom portion of the housing, the water drops of the reforming water dripped from the second end of the reforming water supply pipe are heated while increasing the heated area. Because the water drops are easily evaporated, the dripped water drops of the reforming water are inhibited from bumping. Because the second end of the reforming water supply pipe is not in contact with the granular material layer and with the heated perforated plate, the second end is not heat-conducted from the granular material layer and from the heated perforated plate. Thus, the reforming water within the reforming water supply pipe is inhibited from bumping.

According to another aspect of this disclosure, the raw material for reformation is supplied to the evaporation portion from the upstream of the perforated plate.

According to the aforementioned construction, because the raw material for reformation is provided, the water vapor generated at the upper stream of the evaporation portion is easily delivered to the granular material layer and to the reforming portion.

According to still another aspect of this disclosure, the housing includes a raw material supply pipe for reformation supplying the raw material for reformation to the evaporation portion, the raw material supply pipe being fixed to the housing in a state where the raw material supply pipe for reformation covers an outer circumference of the reforming water supply pipe, the raw material supply pipe opening to the evaporation portion.

According to the aforementioned construction, because the raw material for reformation is provided from the raw material supply pipe for reformation, the reforming water supply pipe is inhibited from being heat-conducted from the heated housing. Accordingly, the reforming water within the reforming water supply pipe is inhibited from bumping.

According to further aspect of this disclosure, the housing includes a reformed gas delivery pipe delivering the reformed gas. The housing is formed in an U-shape, the housing including a first end and a second end, the first end being connected to the reforming water supply pipe and to the raw material supply pipe for reformation, the second end being connected to the reforming gas delivery pipe.

According to the aforementioned construction, because the reformed gas delivery pipe, the reforming water supply pipe of the evaporation portion and the raw material supply pipe for reformation are provided from a same side, the concentration of the positions of the reformed gas delivery pipe, of the reforming water supply pipe of the evaporation portion and of the raw material supply pipe for reformation is available.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a view schematically illustrating a fuel cell system outside the above-mentioned aspect of this disclosure;
Fig. 2 is a perspective view illustrating an evaporation portion and a reforming portion shown in Fig. 1;
Fig. 3 (not part of the claimed invention) is a side cross sectional view of a portion of respective side surfaces and surroundings of the evaporation portion and of the reforming portion shown in Fig. 1; and
Fig. 4 is a side cross sectional view illustrating a modified example of the evaporation portion shown in Fig. 3 in accordance with an embodiment of this disclosure.

### DETAILED DESCRIPTION

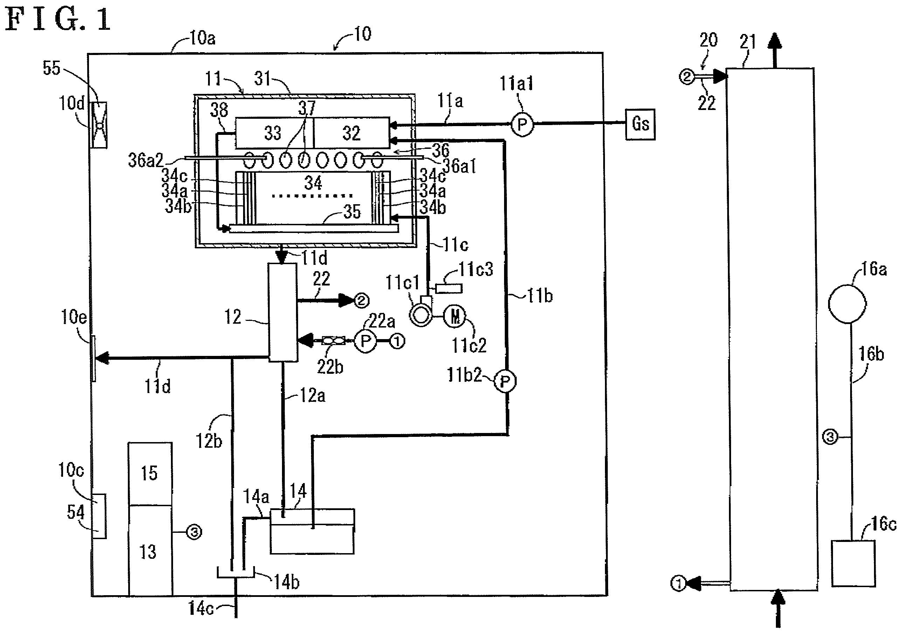

A fuel cell system outside the aspect of this disclosure will hereunder be explained. As shown in Fig. 1, the fuel cell system includes a power generation unit 10 and a hot water storage tank 21. The power generation unit 10 includes a body 10a, a fuel cell module 11 being provided within the body 10a, a heat exchanger 12, an inverter device 13, a reservoir 14, and a control unit 15.

The fuel cell module 11 at least includes a fuel cell 34. The fuel cell module 11 is supplied with a raw material for reformation, a reforming water and a cathode air (an air) serving as a cathode gas. The raw material for reformation corresponds to a gaseous fuel for reformation, for example, a natural gas and a liquefied petroleum gas, or a LP gas and a liquid fuel for reformation, for example, a coal oil, a gasoline, and a methanol. Here, the fuel cell system using the natural gas will be explained. In particular, the fuel cell module 11 is connected to a first end of a raw material supply pipe 11a for reformation supplying the raw material for reformation, the raw material supply pipe 11a for reformation having a second end that is connected to a resource Gs, for example, a gas supply pipe of a city gas (the natural gas). The raw material supply pipe 11a for reformation is provided with a raw material pump 11a1. The fuel cell module 11 is further connected to a first end of a reforming water supply pipe 11b supplying the reforming water, the reforming water supply pipe 11b having a second end that is connected to the reservoir 14. The reforming water supply pipe 11b is provided with a reforming water pump 11b2. The fuel cell module 11 is further connected to a first end of a cathode air supply pipe 11c supplying the cathode air, the cathode air supply pipe 11c having a second end that is connected to a cathode air blower 11c1.

The heat exchanger 12 is supplied with an exhaust gas exhausted from the fuel cell module 11 and with a stored hot water flown from the hot water storage tank 21. The heat exchanger 12 exchanges heat between the exhaust gas and the stored hot water. In particular, the hot water storage tank 21 stores the hot water and is connected to a stored hot water circulation line 22 that circulates the stored hot water (circulates in directions shown with arrows in Fig. 1). The stored hot water circulation line 22 is provided with a stored hot water circulation pump 22a, a radiator 22b and the heat exchanger 12 in the aforementioned order from a lower end to an upper end of the hot water storage tank 21. The heat exchanger 12 is connected to (is inserted with) a first exhaust pipe 11d provided from the fuel cell module 11. The heat exchanger 12 is connected to a condensed water supply pipe 12a that is connected to the reservoir 14.

The exhaust gas flown from the fuel cell module 11 is introduced to the heat exchanger 12 via the first exhaust pipe 11d. Because the exhaust gas exchanges the heat with the stored hot water, the exhaust gas is condensed and cooled. The exhaust gas after the condensation passes through a second exhaust pipe 11d and is exhausted outside of the body 10a from an outlet 10e for the exhaust gas. The condensed water passes through the condensed water supply pipe 12a from the heat exchanger 12 and is supplied to the reservoir 14. The reservoir 14 purifies the condensed water with an ion exchange resin.

According to the fuel cell system, a water flown out of the reservoir 14 that is supplied with the condensed water generated at the heat exchanger 12 is received at a water vessel 14b via an over flow line 14a. The water flown out of the reservoir 14 is discharged out of the body 10a via a drain pipe 14c.

The second exhaust pipe 11d is provided with a drain pipe passage 12b that is divided at a downstream of the heat exchanger 12 and that is communicated with the water vessel 14b.

An exhaust heat recovery system 20 is configured with the heat exchanger 12, the hot water storage tank 21 and the stored hot water circulation line 22. The exhaust heat recovery system 20 recovers and stores the exhaust heat of the fuel cell module 11 in the stored hot water.

The inverter device 13 is inputted with a direct current voltage (a DC voltage) outputted from the fuel cell 34 and converts the DC voltage to a predetermined alternating current voltage (a predetermined AC voltage). Then, the inverter device 13 outputs the predetermined AC voltage to a power supply line 16b that is connected to an alternating-current system power supply 16a and to an external power load 16c (for example, an electric appliance). The inverter device 13 is inputted with the AC voltage transmitted from the system power supply 16a via the power supply line 16b and converts the AC voltage to a predetermined DC voltage. Then, the inverter device 13 outputs the predetermined DC voltage to an accessory (for example, a pump or a blower) and to the control unit 15. The control unit 15 controls an operation of the fuel cell system by driving the accessory.

The fuel cell module 11 includes a casing 31, an evaporation portion 32, a reforming portion 33 and the fuel cell 34. The casing 31 is made from a thermal insulating material and is formed in a box shape. The evaporation portion 32 is heated by a combustion gas and generates the water vapor by evaporating the supplied reforming water. At the same time, the evaporation portion 32 preheats the supplied raw material for reformation. The evaporation portion 32 mixes the generated water vapor and the preheated raw material for reformation and supplies the mixture of the generated water vapor and the preheated raw material for reformation to the reforming portion 33.

The evaporation portion 32 is connected to a first end of the reforming water supply pipe 11b that has a second end (a lower end) that is connected to the reservoir 14. The evaporation portion 32 is connected to the raw material supply pipe 11a for reformation that is connected to the resource Gs.

Because the reforming portion 33 is heated by the combustion gas and is supplied with a heat desired for reformation reaction of the water vapor, the reforming portion 33 generates a reformed gas from a mixed gas (the raw material for reformation and the water vapor) supplied from the evaporation portion 32 and outputs the reformed gas via a reformed gas delivery pipe 38.

The fuel cell 34 includes plural cells 34a that are laminated with one another, the cell 34a being configured with a fuel pole, an air pole (an oxidized pole) and an electrolyte that is positioned between the fuel pole and the air pole. The fuel cell of this disclosure serves as a solid oxide fuel cell. The fuel cell uses a zirconium oxide as the electrolyte, the zirconium oxide serving as a type of a solid oxide. The fuel pole of the fuel cell 34 is supplied with a hydrogen, a carbon monoxide, and a methane gas as a fuel. The operation temperature is, for example, from 400 to 1000 degree Celsius, however, the power generation under a rating amount is available in a case where the operation temperature is, for example, lower than 400 degree Celsius. The power generation is permitted to be started at 600 degree Celsius. The natural gas and the coal gas are applicable as a direct fuel in addition to the hydrogen. In this case, the reforming portion 33 does not have to be provided.

A fuel flow passage 34b flowing the reformed gas serving as a fuel is provided at a side where the fuel pole of the cell 34a is positioned. An air flow passage 34c flowing the air (the cathode air) serving as the cathode gas is provided at a side where the air pole of the cell 34a is positioned.

The fuel cell 34 is provided on a manifold 35. The manifold 35 is supplied with the reformed gas flown from the reforming portion 33 via the reformed gas delivery pipe 38. A first end (a lower end) of the fuel flow passage 34b is connected to a fuel outlet of the manifold 35. The reformed gas outputted from the fuel outlet is introduced from the lower end of the fuel flow passage 34b and is outputted to an upper end of the fuel flow passage 34b. The cathode air delivered by the cathode air blower 11c1 is supplied via the cathode air supply pipe 11c. The cathode air is introduced from a lower end of the air flow passage 34c and is outputted to an upper end of the air flow passage 34c.

The cathode air blower 11c1 is driven by an electric motor 11c2. The drive duty of the electric motor 11c2 is calculated by the control unit 15. A flow sensor 11c3 being provided at a downstream of the cathode air blower 11c1 of the cathode air supply pipe 11c detects the flow rate of the cathode air discharged from the cathode air flower 11c1. The flow sensor 11c3 transmits the detection result to the control unit 15.

A combustion portion 36 is provided between the fuel cell 34 and a set of the evaporation portion 32 and the reforming portion 33. The combustion portion 36 combusts an anode-off gas (a fuel-off gas) flown from the fuel cell 34 with a cathode off gas (an oxidant off-gas) and heats the evaporation portion 32 and the reforming portion 33 with the combustion gas (a flame 37).

The combustion portion 36 includes a first ignition heater 36a1 and a second ignition heater 36a2 for igniting the anode-off gas. The exhaust gas generated at the combustion portion 36 passes through the first exhaust pipe 11d from the fuel cell module 11 and reaches the heat exchanger 12.

The body 10a includes an inlet 10c, an outlet 10d for ventilation, and the outlet 10e for the combustion gas. The inlet 10c takes in an external air. The outlet 10d for ventilation exhausts an air within the body 10a to the outside of the body 10a. The outlet 10e for the combustion gas exhausts the exhaust gas flown from the heat exchanger 12 to the outside of the body 10a. The inlet 10c is provided with a check valve 54 that allows an air flown from the outside of the body 10a to inside and that restricts the flow of the air in a reverse direction.

The outlet 10d for ventilation includes a ventilation fan 55. The ventilation fan 55 delivers the air (the ventilated exhaustion) within the body 10a to the outside of the body 10a.

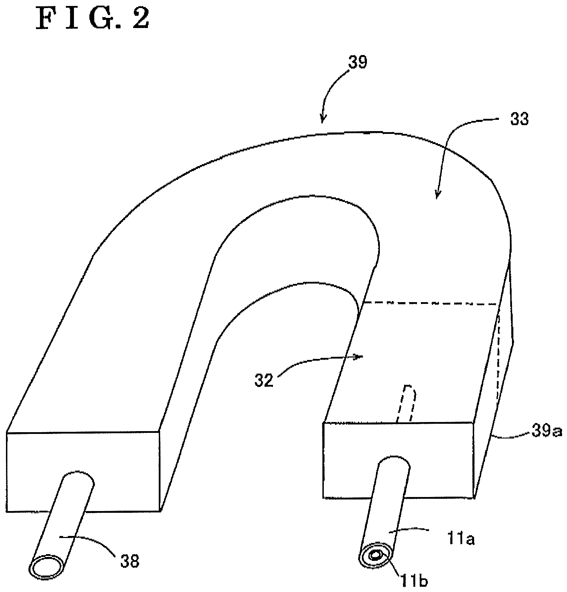

Next, the respective structures of the evaporation portion 32 and of the reforming portion 33 shown in Fig. 1 will be explained with reference to Fig. 2. As shown in Fig. 2, the evaporation portion 32 and the reforming portion 33 are communicated with each other to be sequentially positioned along a longitudinal direction of a substantially U-shaped housing 39 and are contained in the housing 39. A first end of the housing 39 is provided with the raw material supply pipe 11a for reformation and with the reforming water supply pipe 11b. A second end of the housing 39 is provided with the reformed gas delivery pipe 38.

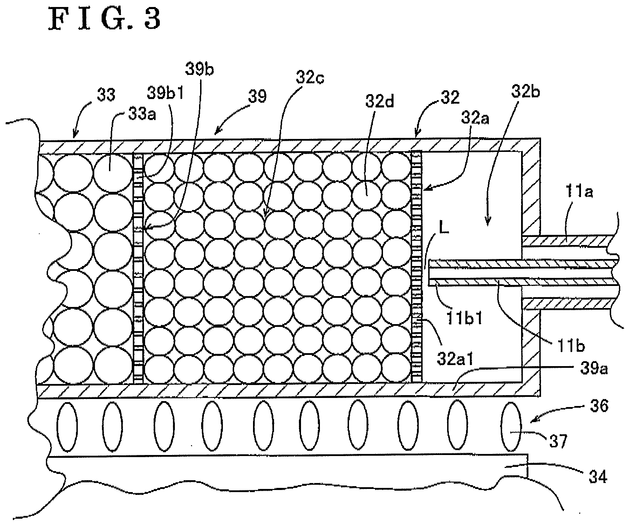

As shown in Fig. 3, a bottom portion 39a of the housing 39 is heated with the combustion gas (the flame 37) that is generated by the combustion of the anode-off gas at the combustion portion 36. Thus, the evaporation portion 32 and the reforming portion 33 are heated with the flame 37.

As shown in Fig. 3, as an upstream 32b of the evaporation portion 32 is defined, a perforated plate 32a having plural holes 32a1 (being penetrated therethrough) is standingly provided at the bottom portion 39a of the housing 39. A granular material layer 32c being filled with plural granular materials 32d is provided between the reforming portion 33 and the perforated plate 32a. The granular material 32d is made of ceramic, for example, aluminum, and is formed in a sphere shape. The perforated plate 32a is made of metal, for example, stainless steel and serves as a punching metal being provided with plural holes 32a1, each of the plural holes 32a1 having a diameter smaller than a diameter of the granular material 32d. The granular material layer 32c and a distal end 11b1 (i.e., serving as a second end) of the reforming water supply pipe 11b are defined by the perforated plate 32a.

As shown in Fig. 3, the distal end 11b1 of the reforming water supply pipe 11b is spaced apart from the perforated plate 32a by a predetermined distance L. The predetermined distance L serves as a distance that inhibits the water drops of the reforming water outputted from the distal end 11b1 of the reforming water supply pipe 11b from being dripped directly to the bottom portion 39a of the housing 39 and that inhibits the reforming water supply pipe 11b from being heat-conducted from the perforated plate 32a. Specifically, the predetermined distance L corresponds to, for example, 0.1 to 10 millimeter (mm), particularly, for example, 1 mm to 3 mm, however, is not limited.

As shown in Fig. 3, the raw material supply pipe 11a for reformation supplying the raw material for reformation to the evaporation portion 32 is fixed to the housing 39 in a state where the raw material supply pipe 11a for reformation covers an outer circumference of the reforming water supply pipe 11b and is open to the evaporation portion 32. The raw material for reformation is supplied to the evaporation portion 32 from the upstream 32b of the perforated plate 32a.

Because the bottom portion 39a of the housing 39 is heated, the temperature of the perforated plate 32a of the evaporation portion 32, the perforated plate 32a standingly provided at the housing 39, or the bottom portion 39a of the housing 39, is increased. The reforming water supplied from the distal end 11b1 of the reforming water supply pipe 11b to the upstream 32b of the evaporation portion 32 serves as water drops that are dripped intermittently. Because the distal end 11b1 of the reforming water supply pipe 11b is spaced apart from the perforated plate 32a by the predetermined distance L, the reforming water supplied from the distal end 11b1 of the reforming water supply pipe 11b is not directly dripped on the bottom portion 39a of the housing 39 and is dripped on the perforated plate 32a.

The water drops of the reforming water dripped on the perforated plate 32a from the distal end 11b1 of the reforming water supply pipe 11b come in contact with a surface of the perforated plate 32a. Then, because the reforming water is heated by the surface of the perforated plate 32a, a portion of the water drops of the reforming water is evaporated and the water vapor is generated. Then, a portion of the water drops of the reforming water that is not evaporated runs down the perforated plate 32a and moves towards the bottom portion 39a of the housing 39, the bottom portion 39a that is heated higher than the perforated plate 32a. Accordingly, because the water drops of the reforming water that is not evaporated move toward the bottom portion 39a of the housing 39, the water drops of the reforming water that is not evaporated are connected with one another and are changed to the reforming water being flown. Because the water drops are heated while increasing a heated area, the water drops are easily evaporated. The water drops are evaporated and the water vapor is generated before reaching the bottom portion 39a of the housing 39. As such, the reforming water supplied to the evaporation portion 32 via the distal end 11b1 of the reforming water supply pipe 11b is inhibited from bumping.

The reforming water supplied from the distal end 11b1 of the reforming water supply pipe 11b passes through the hole 32a1 of the perforated plate 32a and reaches the granular material layer 32c. The reforming water comes in contact with the surface of the granular material 32d that is heated. Because the reforming water is heated at the surface of the granular material 32d, the portion of the water drops of the reforming water is evaporated and the water vapor is generated. The portion of the water drops of the reforming water that is not evaporated runs down the surface of the granular material 32d. Because the water drops are heated while increasing the heated area, the water drops are easily evaporated. The water drops are evaporated and the water vapor is generated before reaching the bottom portion 39a of the housing 39.

Next, the measurement result of a pressure level P observed at the upstream 32b of the evaporation portion 32 in a case where the water drops of the reforming water are dripped from the distal end 11b1 of the reforming water supply pipe 11b under a condition where the distance L between the distal end 11b1 of the reforming water supply pipe 11b and the perforated plate 32a is set at 1 mm, 3mm, 15 mm, and 30mm in a horizontal direction will hereunder be explained.

In a case where the distance L corresponds to 1 mm, the measurement result of the pressure level P is not generally changed even if the measurement result is changed slightly, That is, in a case where the distance L corresponds to 1 mm, it is determined that the reforming water is inhibited from bumping.

In a case where the distance L corresponds to 3 mm, the measurement result of the pressure level P is not generally changed even if, similar to the case where the distance L corresponds to 1 mm, the measurement result is changed slightly. That is, in a case where the distance L corresponds to 3 mm, similar to a case where the distance L corresponds to 1 mm, it is determined that the reforming water is inhibited from bumping.

In a case where the distance L corresponds to 15 mm, the measurement result of the pressure level P shows a pressure level change of substantially 10 times of a case where the distance L corresponds to 1 mm, the pressure level change repeated in accordance with a timing when the water drops of the reforming water are dripped. Accordingly, in a case where the distance L corresponds to 15 mm, it is determined that the reforming water is not inhibited from bumping.

In a case where the distance L corresponds to 30 mm, the measurement result of the pressure level P shows a pressure level change of substantially 50 times of the case where the distance L corresponds to 1mm, the pressure level change repeated in accordance with the timing when the water drops of the reforming water are dripped. Accordingly, in a case where the distance L corresponds to 30 mm, similar to a case where the distance L corresponds to 15 mm, it is determined that the reforming water is not inhibited from bumping.

Based on the measurement result from the distance L and the pressure level P, in a case where the distance L between the distal end 11b1 of the reforming water supply pipe 11b and the perforated plate 32a corresponds to 1 mm or 3 mm, it is determined that the water drops dripped from the distal end 11b1 of the reforming water supply pipe 11b run down the perforated plate 32a and move towards the bottom portion 39a of the housing 39 instead of being directly dripped to the bottom portion 39a of the housing 39. At the same time, it is determined that the reforming water supply pipe 11b is inhibited from being heat-conducted from the perforated plate 32a. Thus, the water drops dripped from the reforming water supply pipe 11b and the reforming water that is positioned inside the reforming water supply pipe 11b are inhibited from bumping.

As described above, as shown in Fig. 3, the raw material supply pipe 11a for reformation is fixed at the housing 39 in a state where the raw material supply pipe 11a for reformation covers the outer circumference of the reforming water supply pipe 11b and opens to the evaporation portion 32. Accordingly, because the raw material supply pipe 11a for reformation is positioned between the heated bottom portion 39a of the housing 39 and the reforming water supply pipe 11b, the reforming water supply pipe 11 b is not in contact with the housing 39 and is inhibited from being heat-conducted from the housing 39 by the raw material for reformation. Thus, the reforming water within the reforming water supply pipe 11b is inhibited from bumping.

The evaporation portion 32 preheats the raw material for reformation supplied via the raw material supply pipe 11a for reformation. The water vapor generated by evaporating the reforming water and the preheated raw material for reformation are mixed at the granular material layer 32c that is filled with the granular materials 32d. Then, the mixture of the water vapor and the raw material for reformation are outputted to the reforming portion 33 via through holes 39b1 of a partition plate 39b being made of, for example, the punching metal.

The reforming portion 33 generates the reformed gas with the water vapor (the water vapor for reformation) and with the raw material for reformation. The reforming portion 33 includes a catalyst 33a that corresponds to a catalyst, for example, a ruthenium-type (a Ru type) catalyst or a nickel-type (a Ni type) catalyst. The catalyst 33a is filled within the housing 39. Here, because the reforming portion 33 is heated by the combustion gas and is supplied with a heat desired for reformation reaction of the water vapor, the reforming portion 33 generates the reformed gas with the mixed gas (the raw material for reformation and the water vapor) supplied from the evaporation portion 32. In particular, because the mixed gas is reacted by the catalyst 33a and is reformed, the hydrogen gas and the carbon monoxide gas are generated (the water vapor reformation reaction). At the same time, because the carbon monoxide and the water vapor generated by the water vapor reformation reaction are reacted with each other, a carbon monoxide shift reaction reforming the carbon monoxide and the water vapor into the hydrogen gas and the carbon dioxide occurs. The generated reformed gas (the anode gas) is delivered to the fuel cell 34 via the reformed gas delivery pipe 38. The anode gas includes a hydrogen, a carbon monoxide, a carbon dioxide, a water vapor and a natural gas (a methane gas) before reformation, and a reforming water (water vapor) that is not used for the reformation. The water vapor reformation reaction corresponds to an endothermic reaction. The carbon monoxide shift reaction corresponds to a heat reaction. The perforated plate 32a of the evaporation portion 32 is heated by the heat generated by the carbon monoxide shift reaction that is generated at the reforming portion 33.

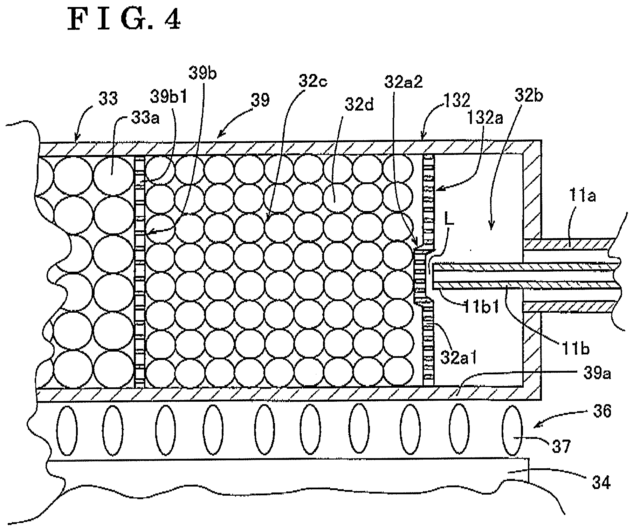

Next, in accordance with an embodiment of this disclosure, a modified example of the evaporation portion 32 will be explained with reference to Fig. 4. According to the modified example, a recessed portion 32a2 is provided at a perforated plate 132a of an evaporation portion 132, which is different from the perforated plate 32a of the evaporation portion 32 shown in Fig. 3. The recessed portion 32a2 is provided at the perforated plate 132a so as to face the distal end 11b1 of the reforming water supply pipe 11b. Because the distal end 11b1 of the reforming water supply pipe 11b is surrounded with the recessed portion 32a2, the reforming water is inhibited from being directly dripped from the distal end 11b1 of the reforming water supply pipe 11b to the bottom portion 39a of the housing 39. Because the recessed portion 32a2 is provided, the reforming water comes to be easily supplied from the distal end 11b1 of the reforming water supply pipe 11b to the perforated plate 132.

According to the aforementioned embodiment, the housing 39 contains the evaporation portion 32 and the reforming portion 33. The evaporation portion 32 and the reforming portion 33 are communicated with each other via the partition plate 39b. Alternatively, the evaporation 32 and the reforming portion 33 are provided within respective housings. The respective housings are communicated with each other via a pipe.

According to the aforementioned embodiment, the evaporation portion 32 and the reforming portion 33 are connectively formed in the substantially U-shape. Alternatively, the evaporation portion 32 and the reforming portion 33 are connectively formed linearly.

## Claims

1. A fuel cell system, comprising:
a fuel cell (34) configured for generating an electric power with a reformed gas and with a cathode gas;
a combustion portion (36) for burning an anode-off gas outputted from the fuel cell (34);
an evaporation portion (32) being heated by the combustion portion (36), the evaporation portion (32) generating a water vapor by evaporating a supplied reforming water;
a reforming portion (33) being heated by the combustion portion (36), the reforming portion (33) generating the reformed gas with the water vapor and with a raw material for reformation;
a reservoir (14) storing the reforming water;
a reforming water pump (11b2) for pumping the reforming water from the reservoir (14), the reforming water pump (11b2) discharging the reforming water toward the evaporation portion (32);
a housing (39) containing the evaporation portion (32) and the reforming portion (33) in a state where the evaporation portion (32) and the reforming portion (33) are communicated with each other, the housing (39) including a bottom portion (39a) that is heated;
a perforated plate (132a) being provided within the housing (39) so as to define an upstream (32b) of the evaporation portion (32), the perforated plate (132a) having a plurality of holes (32a1) being penetrated therethrough;
a granular material layer (32c) being provided between the reforming portion (33) and the perforated plate (132a); and
a reforming water supply pipe (11b) including a first end and a second end (11b1), the first end being connected to an outlet of the reforming water pump (11b2), the second end (11b1) facing and opening to the perforated plate (132a) in a state where the second end (11b1) is spaced apart from the perforated plate (132a),
wherein the second end (11b1) of the reforming water supply pipe (11b) is spaced apart from the perforated plate (132a) by a predetermined distance (L) in order for the reforming water discharged from the reforming water pump (11b2) to run down the perforated plate (132a) and to move towards the bottom portion (39a) of the housing (39),
**characterized in that**
the perforated plate (132a) is formed with a recessed portion (32a2),
the second end (11b1) of the reforming water supply pipe (11b) is surrounded with the recessed portion (32a2) of the perforated plate (132a) in a state where the second end (11b1) is spaced apart from the recessed portion (32a2) by the predetermined distance (L),
the system being configured so that the reforming water discharged from the water pump (11b2) is not directly dripped on the bottom portion (39a) of the housing (39) and is dripped on the perforated plate (132a),
a portion of the reforming water dripped on the perforated plate (132a) is evaporated and the water vapor is generated, and
another portion of the reforming water dripped on the perforated plate (132a) that is not evaporated runs down the perforated plate (132a) and moves towards the bottom portion (39a) of the housing (39), wherein the other portion of the reforming water is evaporated before reaching the bottom (39a) of the housing (39).

2. The fuel cell system according to claim 1, wherein the reforming water supply pipe (11b) is provided at the housing (39) so that the second end (11b1) of the reforming water supply pipe (11b) protrudes into the housing (39) towards the perforated plate (132a).

3. The fuel cell system according to either claim 1 or 2, wherein the raw material for reformation is supplied to the evaporation portion (32) from the upstream (32b) of the perforated plate (132a).

4. The fuel cell system according to claim 3, wherein the housing (39) includes a raw material supply pipe (11a) for reformation supplying the raw material for reformation to the evaporation portion (32), the raw material supply pipe (11a) being fixed to the housing (39) in a state where the raw material supply pipe (11a) for reformation covers an outer circumference of the reforming water supply pipe (11b), the raw material supply pipe (11a) opening to the evaporation portion (32).

5. The fuel cell system according to claim 4, wherein
the housing (39) includes a reformed gas delivery pipe (38) delivering the reformed gas; and
the housing (39) is formed in an U-shape, the housing (39) including a first end and a second end, the first end being connected to the reforming water supply pipe (11b) and to the raw material supply pipe (11a) for reformation, the second end being connected to the reforming gas delivery pipe (38).

## Patentansprüche

1. Brennstoffzellensystem mit:
einer Brennstoffzelle (34), die für die Erzeugung eines elektrischen Stroms mit einem reformierten Gas und mit einem Kathodengas konfiguriert ist;
einem Verbrennungsabschnitt (36) zum Verbrennen eines von der Brennstoffzelle (34) ausgegebenen Anodenabgases;
einem Verdampfungsabschnitt (32), der durch den Verbrennungsabschnitt (36) erhitzt wird, wobei der Verdampfungsabschnitt (32) durch Verdampfen eines zugeführten Reformierwassers einen Wasserdampf erzeugt;
einem Reformierabschnitt (33), der durch den Verbrennungsabschnitt (36) erhitzt wird, wobei der Reformierabschnitt (33) mit dem Wasserdampf und mit einem Ausgangsmaterial zur Reformierung das reformierte Gas erzeugt;
einem Speicher (14), der das Reformierwasser speichert;
einer Reformierwasserpumpe (11b2) zum Herauspumpen des Reformierwassers aus dem Speicher (14), wobei die Reformierwasserpumpe (11b2) das Reformierwasser in Richtung des Verdampfungsabschnitts (32) fördert;
einem Gehäuse (39), das den Verdampfungsabschnitt (32) und den Reformierabschnitt (33) in einem Zustand enthält, in dem der Verdampfungsabschnitt (32) und der Reformierabschnitt (33) miteinander in Verbindung stehen, wobei das Gehäuse (39) einen Bodenabschnitt (39a) aufweist, der erhitzt wird;
einer perforierten Platte (132a), die innerhalb des Gehäuses (39) so vorgesehen ist, dass sie eine stromaufwärtige Seite (32b) des Verdampfungsabschnitts (32) definiert, wobei die perforierte Platte (132a) eine Vielzahl von sie durchdringenden Löchern (32a1) hat;
einer körnigen Materialschicht (32c), die zwischen dem Reformierabschnitt (33) und der perforierten Platte (132a) vorgesehen ist; und
einer Reformierwasser-Versorgungsleitung (11b), die ein erstes Ende und ein zweites Ende (11b1) aufweist, wobei das erste Ende mit einem Auslass der Reformierwasserpumpe (11b2) verbunden ist und das zweite Ende (11b1) der perforierten Platte (132a) in einem Zustand zugewandt ist und sich zu ihr öffnet, in dem das zweite Ende (11b1) von der perforierten Platte (132a) beabstandet ist,
wobei das zweite Ende (11b1) der Reformierwasser-Versorgungsleitung (11b) von der perforierten Platte (132a) um einen vorbestimmten Abstand (L) beabstandet ist, damit das aus der Reformierwasserpumpe (11b2) hinausgeförderte Reformierwasser die perforierte Platte (132a) herunterläuft und sich in Richtung des Bodenabschnitts (39a) des Gehäuses (39) bewegt,
**dadurch gekennzeichnet, dass**
die perforierte Platte (132a) mit einem vertieften Abschnitt (32a2) ausgebildet ist,
das zweite Ende (11b1) der Reformierwasser-Versorgungsleitung (11b) mit dem vertieften Abschnitt (32a2) der perforierten Platte (132a) in einem Zustand umgeben ist, in dem das zweite Ende (11b1) von dem vertieften Abschnitt (32a2) um den vorbestimmten Abstand (L) beabstandet ist,
das System so konfiguriert ist, dass das aus der Wasserpumpe (11b2) hinausgeförderte Reformierwasser nicht direkt auf den Bodenabschnitt (39a) des Gehäuses (39) tropft und auf die perforierte Platte (132a) tropft,
ein Teil des auf die perforierte Platte (132a) getropften Reformierwassers verdampft und der Wasserdampf erzeugt wird und
ein anderer Teil des auf die perforierte Platte (132a) getropften Reformierwassers, der nicht verdampft ist, die perforierte Platte (132a) herunterläuft und sich in Richtung des Bodenabschnitts (39a) des Gehäuses (39) bewegt, wobei der andere Teil des Reformierwassers verdampft wird, bevor er den Boden (39a) des Gehäuses (39) erreicht.

2. Brennstoffzellensystem nach Anspruch 1, wobei die Reformierwasser-Versorgungsleitung (11b) an dem Gehäuse (39) so vorgesehen ist, dass das zweite Ende (11b1) der Reformierwasser-Versorgungsleitung (11b) in Richtung der perforierten Platte (132a) in das Gehäuse (39) hineinragt.

3. Brennstoffzellensystem nach entweder Anspruch 1 oder 2, wobei dem Verdampfungsabschnitt (32) das Ausgangsmaterial zur Reformierung von der stromaufwärtigen Seite (32b) der perforierten Platte (132a) aus zugeführt wird.

4. Brennstoffzellensystem nach Anspruch 3, wobei das Gehäuse (39) eine Ausgangsmaterial-Versorgungsleitung (11a) zur Reformierung aufweist, die dem Verdampfungsabschnitt (32) das Ausgangsmaterial zur Reformierung zuführt, wobei die Ausgangsmaterial-Versorgungsleitung (11a) an dem Gehäuse (39) in einem Zustand befestigt ist, in dem die Ausgangsmaterial-Versorgungsleitung (11a) zur Reformierung einen Außenumfang der Reformierwasser-Versorgungsleitung (11b) bedeckt, und sich die Ausgangsmaterial-Versorgungsleitung (11a) zum Verdampfungsabschnitt (32) öffnet.

5. Brennstoffzellensystem nach Anspruch 4, wobei
das Gehäuse (39) eine Abführleitung für reformiertes Gas (38) aufweist, die das reformierte Gas abführt; und
das Gehäuse (39) in einer U-Form ausgebildet ist, wobei das Gehäuse (39) ein erstes Ende und ein zweites Ende aufweist, das erste Ende mit der Reformierwasser-Versorgungsleitung (11b) und mit der Ausgangsmaterial-Versorgungsleitung (11a) zur Reformierung verbunden ist und das zweite Ende mit der Abführleitung für Reformiergas (38) verbunden ist.

## Revendications

1. Système de pile à combustible, comprenant :
une pile à combustible (34) configurée pour générer une puissance électrique avec un gaz reformé et avec un gaz de cathode ;
une partie de combustion (36) pour brûler un gaz anodique d'échappement sorti de la pile à combustible (34) ;
une partie d'évaporation (32) étant chauffée par la partie de combustion (36), la partie d'évaporation (32) générant une vapeur d'eau en évaporant une eau de reformage apportée ;
une partie de reformage (33) étant chauffée par la partie de combustion (36), la partie de reformage (33) générant le gaz reformé avec la vapeur d'eau et avec une matière première pour reformage ;
un réservoir (14) stockant l'eau de reformage ;
une pompe à eau de reformage (11b2) pour pomper l'eau de reformage depuis le réservoir (14), la pompe à eau de reformage (11b2) rejetant l'eau de reformage vers la partie d'évaporation (32) ;
un logement (39) contenant la partie d'évaporation (32) et la partie de reformage (33) dans un état où la partie d'évaporation (32) et la partie de reformage (33) communiquent l'une avec l'autre, le logement (39) incluant une partie de fond (39a) qui est chauffée ;
une plaque perforée (132a) étant située dans le logement (39) de manière à définir un amont (32b) de la partie d'évaporation (32), la plaque perforée (132a) comportant une pluralité de trous (32a1) pénétrant à travers celle-ci ;
une couche de matériau granulaire (32c) étant située entre la partie de reformage (33) et la plaque perforée (132a) ; et
un tuyau d'alimentation en eau de reformage (11b) incluant une première extrémité et une seconde extrémité (11b1), la première extrémité étant connectée à une sortie de la pompe à eau de reformage (11b2), la seconde extrémité (11b1) étant tournée vers et s'ouvrant sur la plaque perforée (132a) dans un état où la seconde extrémité (11b1) est espacée de la plaque perforée (132a),
dans lequel la seconde extrémité (11b1) du tuyau d'alimentation en eau de reformage (11b) est espacée de la plaque perforée (132a) d'une distance prédéterminée (L) afin que l'eau de reformage rejetée de la pompe à eau de reformage (11b2) descende la plaque perforée (132a) et se déplace vers la partie de fond (39a) du logement (39),
**caractérisé en ce que**
la plaque perforée (132a) est formée d'une partie évidée (32a2),
la seconde extrémité (11b1) du tuyau d'alimentation en eau de reformage (11b) est entourée par la partie évidée (32a2) de la plaque perforée (132a) dans un état où la seconde extrémité (11b1) est espacée de la partie évidée (32a2) de la distance prédéterminée (L),
le système étant configuré de telle sorte que l'eau de reformage rejetée de la pompe à eau (11b2) ne goutte pas directement sur la partie de fond (39a) du logement (39) et goutte sur la plaque perforée (132a),
une partie de l'eau de reformage ayant goutté sur la plaque perforée (132a) est évaporée et la vapeur d'eau est générée, et
une autre partie de l'eau de reformage ayant goutté sur la plaque perforée (132a) qui n'est pas évaporée descend la plaque perforée (132a) et se déplace vers la partie de fond (39a) du logement (39), dans lequel l'autre partie de l'eau de reformage est évaporée avant d'atteindre le fond (39a) du logement (39).

2. Système de pile à combustible selon la revendication 1, dans lequel le tuyau d'alimentation en eau de reformage (11b) est situé au niveau du logement (39) de telle sorte que la seconde extrémité (11b1) du tuyau d'alimentation en eau de reformage (11b) fait saillie dans le logement (39) vers la plaque perforée (132a).

3. Système de pile à combustible selon la revendication 1 ou 2, dans lequel la matière première pour reformage est apportée à la partie d'évaporation (32) depuis l'amont (32b) de la plaque perforée (132a).

4. Système de pile à combustible selon la revendication 3, dans lequel le logement (39) inclut un tuyau d'alimentation en matière première (11a) pour reformage apportant la matière première pour reformage à la partie d'évaporation (32), le tuyau d'alimentation en matière première (11a) étant fixé au logement (39) dans un état où le tuyau d'alimentation en matière première (11a) pour reformage recouvre une circonférence extérieure du tuyau d'alimentation en eau de reformage (11b), le tuyau d'alimentation en matière première (11a) s'ouvrant sur la partie d'évaporation (32).

5. Système de pile à combustible selon la revendication 4, dans lequel
le logement (39) inclut un tuyau de distribution de gaz reformé (38) distribuant le gaz reformé ; et
le logement (39) est formé selon une forme de U, le logement (39) incluant une première extrémité et une seconde extrémité, la première extrémité étant connectée au tuyau d'alimentation en eau de reformage (11b) et au tuyau d'alimentation en matière première (11a) pour reformage, la seconde extrémité étant connectée au tuyau de distribution de gaz de reformage (38).
